# FASCICULE DE BREVET EUROPEEN

(11) **EP 1 413 217 B1**
(45) Date de publication et mention de la délivrance du brevet: **13.06.2007**
(21) Numéro de dépôt: 03292577.8
(22) Date de dépôt: 16.10.2003
(51) Int. Cl.: A44B 18/00

(54) **Surmoule à petite bande à crochets**
Umgossener Hakenverschluss
Overmolded hook-article

(30) Priorité: 23.10.2002 FR 0213217
(43) Date de publication de la demande: 28.04.2004
(73) Titulaire: Aplix, 75008 Paris (FR)
(72) Inventeur: Billarant, Fabrice, 44000 Nantes (FR)
(74) Mandataire: Eidelsberg, Olivier Nathan

(56) Documents cités:
- EP-A- 1 118 443
- WO-A-98/02331
- FR-A- 2 423 666
- US-A- 5 058 245

## Description

La présente invention se rapporte à un surmoulé, destiné à être fixé à un objet coulé en une mousse, le surmoulé étant constitué d'une base dont une face supérieure est destinée à venir en contact avec la mousse pour s'y fixer par solidification de la mousse sur cette face du surmoulé, l'autre face comportant des crochets disposés dans une région en forme de bande oblongue, (voir par exemple le document WO-A-98/02331).
On connaît dans le domaine de nombreux surmoulés. En général pour fixer le surmoulé à l'objet moulé, on forme au fond du moule dans lequel on coule la mousse pour former l'objet moulé, une tranchée ou cavité définie par des parois faisant saillies du fond du moule et sur les bords supérieurs extérieurs desquelles on pose le surmoulé avant de couler la mousse. Dans le fond de la cavité définie par les parois faisant saillies, on place un aimant et on muni la face supérieure du surmoulé d'une nervure de résine métallique qui, par coopération magnétique avec l'aimant, maintien le surmoulé sur les bords supérieurs des parois de la cavité ou tranchée, pour ainsi maintenir en position le surmoulé pendant la coulée de mousse.
Cependant, la pression de la mousse qui coule est forte. Par conséquent il est nécessaire de rendre étanche l'interface entre la face inférieure et les bords supérieurs des parois pour éviter que de la mousse ne s'infiltre à l'intérieur de la tranchée et ne vienne contaminer les crochets qui sont issus de la face inférieure du surmoulé. Une autre manière de procéder consiste à prévoir un cocon de protection des crochets que l'on retire par pelage après le retrait de l'objet moulé du surmoulé. En effet ces crochets, une fois l'objet moulé retiré avec le surmoulé fixé, vont permettre la fixation par l'intermédiaire de boucles, par exemple d'un tissu, pour recouvrir l'objet moulé, qui peut être par exemple un coussin de véhicule automobile. En général, on prévoit de réaliser la base du surmoulé avec deux rampes inclinées vers le haut pour permettre le clipsage du surmoulé entre deux parois latérales. Ce système est bien évidemment compliqué et prend du temps, ce qui dans des installations de fabrications d'objets moulés par exemple des sièges de voiture, pose problème. On peut également prévoir des moyens rapportés tels qu'une couche de mousse pré-solidifiée qui empêche de la mousse liquide, par effet de compression de la mousse pré-solidifiée, de pénétrer dans la cavité. On peut également prévoir des lèvres inférieures issues de la face inférieure et qui entourent les crochets pour les protéger de la mousse. Ces lèvres de protection sont compliquées à fabriquer.

La présente invention vise à surmonter les inconvénients mentionnés ci-dessus de l'art antérieur en proposant un nouveau surmoulé qui est très simple à fabriquer et très simple à utiliser, en particulier en ne nécessitant pas de le clipser entre deux parois de la cavité, ni de prévoir des lèvres de protection ou d'autres moyens de protection des crochets ou de l'interface avec les bords extérieurs supérieurs des parois de la tranchée sur lesquelles est posé le surmoulé lors de sa fixation à l'objet moulé.

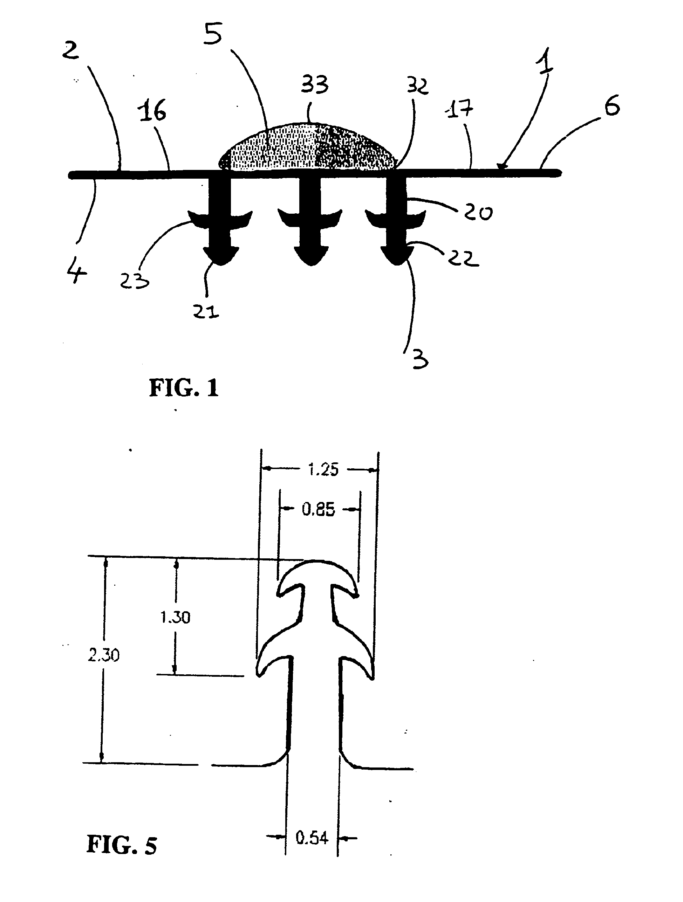

Suivant l'invention, le surmoulé, constitué d'une base ayant une face supérieure et une face inférieure, de crochets issus de la face inférieure de la base et de matériau métallique fixé sur la face supérieure de la base, les crochets étant disposés dans une région en forme de bande longitudinale, est caractérisé en ce que la base est de forme plane, la bande à crochets a une largeur inférieure à 10 mm, de préférence comprise entre 3 et 10 mm, et la base plane est en un matériau tel, et a une épaisseur telle, qu'elle peut se déformer pour épouser les formes ou ondulations de bords supérieurs de parois verticales sur lesquels est destiné à être posé le surmoulé par sa face inférieure.
On entend dans la présente demande par largeur de la bande à crochet la dimension correspondant, en coupe transversale perpendiculaire comme à la figure 1, à la distance entre le point le plus à droite du crochet le plus à droite et le point le plus à gauche du crochets le plus à gauche. Il s'agit de la largeur dite hors tout, notamment la largeur minimale que doit avoir une cavité pour que les crochets puisse y pénétrer.
Ainsi suivant l'invention, on obtient un surmoulé qui, tout en étant suffisamment souple pour épouser toutes formes possibles des bords supérieurs de parois verticales sur lesquels il est destiné à être posé avant durcissement d'une mousse que l'on coule sur lui au fond d'un moule, va pourtant présenter, lorsqu'il est simplement posé au fond du moule sur ces bords extérieurs supérieurs de parois formant une cavité au fond du moule, une étanchéité suffisante au niveau du contact bords des parois - face inférieure pour que la mousse ne puisse pas pénétrer dans la cavité et venir en contact avec les crochets. Aucun système d'étanchéité supplémentaire n'est nécessité au niveau de cette interface. L'utilisation de ce surmoulé et en particulier sa pose au fond du moule puis le coulage de la mousse sur lui pour obtenir l'objet moulé final comportant le surmoulé est donc particulièrement simple.

Suivant un mode de réalisation particulièrement préféré, les crochets sont réalisés sous la forme de rangées longitudinales, le nombre de rangées étant de préférence inférieur ou égal à 3, et les crochets ont une forme en sapin de Noël.

On entend par forme en sapin de Noël, des crochets ayant la forme suivante : Un crochet est constitué d'une tige s'étendant entre une base et une tête, la tige étant de préférence de forme cylindrique, notamment en parallèlepipédique, et au moins une aile étant issue de la surface extérieure de la tige, à un niveau intermédiaire entre la tête et la base, l'aile ayant une forme de préférence recourbée vers la base pour former un crochet.

De préférence la tête est en forme de faîte, la base du faîte étant de plus grande dimension que celle de la surface de section transversale de la tige pour ainsi former un ou plusieurs renfoncements dans lesquels peuvent être prises des boucles.

De préférence, le crochet comporte deux ailes diamétralement opposées.

Suivant un mode de réalisation préféré, la bande longitudinale comportant des crochets, s'arrête à distance des extrémités longitudinales de la base, des régions d'extrémités longitudinales sans crochets étant ainsi formées, notamment sur une distance de quelques millimètres, en particulier inférieur à 15 mm, par exemple entre 5 et 12 mm, pour permettre la pose de la base au niveau de ses extrémités longitudinales directement sur les bords supérieurs des parois formant la cavité.

Dans l'art antérieur, il fallait clipser les bords d'extrémité en largeur du surmoulé entre deux parois latérales et prévoir des parois d'extrémités longitudinales de la cavité suffisamment éloignées pour permettre le passage du surmoulé pour pouvoir le clipser. Ainsi, il était nécessaire de laisser un petit interstice entre les bords d'extrémité longitudinaux de la base et les parois d'extrémités longitudinales de la cavité et cet interstice laissait de la mousse liquide s'infiltrer et détériorer certains crochets, de sorte que la fixation du surmoulé à l'objet moulé était de mauvaise qualité. Grâce à l'invention, on n'a plus besoin de clipser et par conséquent, comme le surmoulé reste posé sur les parois des cavités, on n'a plus besoin de laisser les interstices mentionnés ci-dessus et au contraire on obtient suivant l'invention une excellente étanchéité au niveau de tous les bords supérieurs de toutes les parois de la cavité formée au fond du moule, et ce sans prévoir aucun moyen d'étanchéité rapporté.

Suivant un mode de réalisation particulièrement préféré, la base est en polyamide 6 (Nylon 6) et a une épaisseur comprise entre 0,2 mm et 0,4 mm.

Suivant un mode de réalisation préféré, la base a une épaisseur de 0,15 à 0,35 mm et est en polyamide 6-6 (Nylon 6-6).

Les " Nylons " s'avèrent convenir parfaitement bien, en particulier pour réaliser l'étanchéité de la cavité et assurer une bonne fixation du surmoulé à l'objet moulé.

La présente invention se rapporte également à un objet moulé en mousse sur laquelle est fixé un ou plusieurs surmoulés suivant l'invention par durcissement de la mousse sur la face supérieure de la base après coulage de la mousse dans un moule.

La présente invention vise également un moule dans le fond duquel est réalisée une cavité ayant des parois faisant saillies du fond et sur les bords supérieurs desquelles est destiné à être posé un surmoulé destiné à être fixé à un objet moulé, par solidification d'une mousse que l'on coule par-dessus, caractérisé en ce que la cavité a deux parois latérales distantes d'une distance comprise entre 4,5 et 12 mm.
La distance entre deux parois se mesure suivant la perpendiculaire au paroi. Il s'agit de la largeur de la cavité qui est formée entre les parois dans le plan perpendiculaire aux parois.
La présente invention vise également un procédé de fabrication d'un objet moulé comportant un surmoulé fixé à l'objet et ayant des crochets qui font saillis vers l'extérieur de l'objet moulé qui consiste :
1) When a porous pipe is formed out of high viscous material, the material between a cylinder and a mandrel is heated by frictional force in order to disperse strands after passing a breaker plate or in order to adhere and to polymerize powdered material. The frictional heat is obtained by rotating the cylinder. The Japanese laid open patent No. 8-57936 (reference 1) discloses a die arrangement such that a die for extrusion molding and a molded product can be relatively rotated (see FIG.5). The relative rotation is continuously or intermittently executed and is controlled its rotational mode and degree of the rotation so as to control properties of the molded products.
2) The Japanese laid open patent No. 59-9035 (reference 2) discloses a method to modify a thickness of an extruded pipe by controlling a gap between a die and a rotatable eccentric nipple (mandrel) and also controlling a detected temperature difference in a circumferential direction. In the extruder for forming the pipe, a cross head 62 in which a resin passage between a die 64 and a nipple 65 is eccentrically arranged except at the end of the resin passage (see FIG.6) and a sensor is arranged to detect temperature of molten resin in the radial direction. The die and the nipple are arranged such that either one of them can be rotated around an axis for preventing uneven thickness in the extruded product.
3) The Japanese laid open patent No. 10-29237 (reference 3) discloses a molding method for forming laminated products out of different materials. Distributed and leaked different materials from spiral grooves can be laminated in a predetermined order by rotating a mandrel equipped with the spirals (see FIG.7). Japanese patent JP 63179724 shows a rotatable cylinder (of a certain length, forming a section of the inner surface of the main body).

Ce procédé suivant l'invention est particulièrement simple d'utilisation.

Suivant un perfectionnement du procédé suivant l'invention, celui-ci comporte en outre l'étape qui consiste à poser les bords longitudinaux d'extrémité de la base sur des parois, notamment deux parois d'extrémité, de la cavité lors de la pose du surmoulé sur la cavité.

Suivant encore un autre perfectionnement du procédé, des régions d'extrémité longitudinales de la base sont dépourvues de crochets, notamment sur une distance longitudinale de quelques mm à quelques cm.

Aux figures, données uniquement à titre d'exemple, on décrit un mode de réalisation de l'invention.

La figure 1 est une vue en coupe transversale perpendiculaire d'un surmoulé sur l'invention.

La figure 2 est une vue en coupe longitudinale perpendiculaire du surmoulé sur l'invention posée sur la cavité formée au fond d'un moule ;

La figure 3 est une vue en coupe transversale du surmoulé su l'invention posée sur la cavité formée au fond d'un moule,

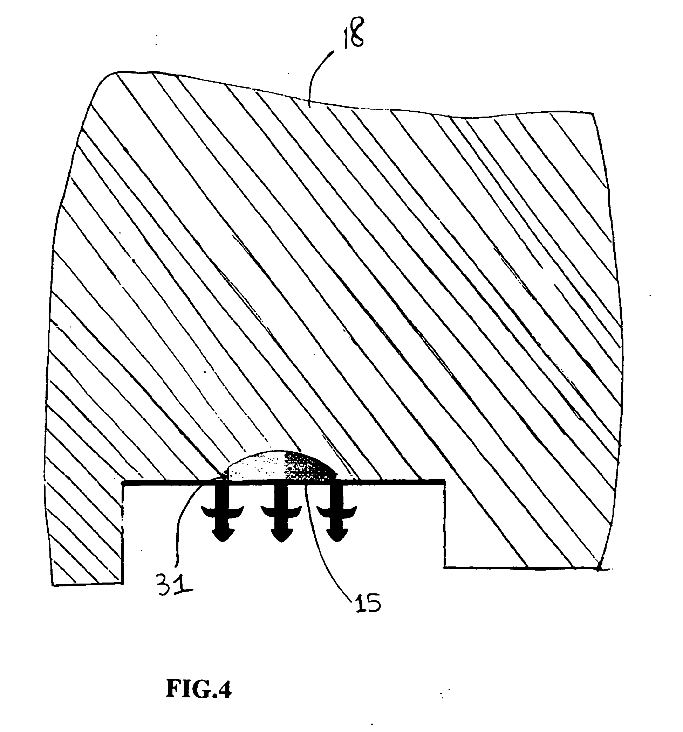

La figure 4 est une vue d'ensemble d'un objet moulé obtenu après solidification de la mousse de la face supérieure de la base, et
La figure 5 représente en coupe un crochet issu de la base.

A la figure 1, le surmoulé 1 est constitué d'une base 2 sensiblemen plane. Des crochets 3 sont issus d'une face 4 de la base, en étant dispose suivant une bande 15 à crochets. Deux régions 16 et 17 en forme de lisières s'étendent de part et d'autre de la bande 15. Ces deux lisières 16 et 17 seron posées sur les bords supérieurs des parois verticales latérales du moule (voir plus loin). Ces deux lisières ne comportent pas de crochets. Une résine métallique 5, posée sous la forme d'une nervure, est fixée notamment par collage ou simple solidification de la résine sur la face 6 opposée à la face précédente de la base. Les crochets sont disposés suivant des rangées, au dessin 3 rangées sont représentées. En général, la base 1 a une longueu (dans le sens perpendiculaire au dessin) bien plus grande que sa largeur. De même, les rangées des crochets sont disposées dans une bande qui est plus longue que large. La bande 15 de crochets ne s'étend toutefois pas de part et part longitudinalement de la base. En effet il est prévu deux régions 7, 8 au; extrémités finales longitudinales de la bande à crochets sans crochet. Ces deux régions 7, 8 permettent de poser la base avec les crochets vers le bas sur une cavité 9 formée au fond du moule, au niveau des extrémités longitudinales de la base 2. Elles ont une dimension en longueur de 12 mm.

Les crochets ont la forme suivante : le crochet 3, dit en forme de sapin de Noël, comprend une tige 20 de section transversale rectangulaire, notamment carrée, issue de la base et se terminant par une tête 21, formée d'un faîte ayant deux surfaces inclinées se rejoignant en la pointe et dont la base est de plus grande dimension que la section transversale de la tige, de manière à former deux renfoncements 22 de part et d'autre de la tige. Sensiblement à mi-distance en hauteur, deux ailes 23 en forme de crochet recourbé vers le bas sont issues de la tige. Ces crochets sont réalisés par extrusion.
La hauteur totale d'un crochet est de 2,3 mm. La largeur entre le point le plus à droite de l'aile droite et le point le plus à gauche de l'aile gauche est 1,25 mm, notamment dans le plan de la figure 5. La largeur de la tige au niveau de la base est de 0,54 mm. La distance en hauteur entre le sommet du crochet et la pointe de l'aile droite ou gauche est de 1,3 mm. Il convient de noter que la tige pourrait également être cylindrique circulaire avec une seule aile faisant tout le tour et une tête de forme conique.
La largeur de la bande à crochets est comprise entre 3 et 10 mm. Au dessin elle est de 8 mm. La largeur de chaque lisière 16 et 17 est par exemple comprise entre 2 et 30 mm, de préférence entre 7 et 15 mm.

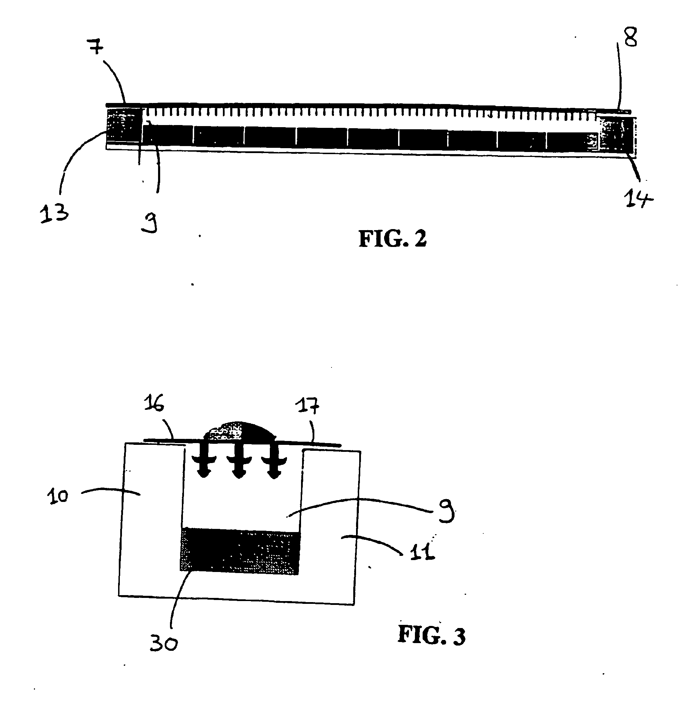

A la figure 3 il est représenté le surmoulé posé avec les crochets orientés dans la cavité 9 formée au fond d'un moule. Cette cavité 9 comporte en coupe transversale deux parois latérales 10 et 11 parallèles, faisant saillies du fond du moule. Cette cavité est fermée et il y a également deux parois 13, 14 latérales parallèles, que l'on ne voit pas dans cette coupe, mais que l'on voit à la figure 2. C'est sur ces deux parois que sont posées les deux régions 7, 8, sans crochets aux deux extrémités opposées longitudinales de la bande à crochets. Les deux parois 10 et 11 latérales du moule sont à distance l'un de l'autre, la distance étant inférieure à environ 12 mm, de préférence inférieure à 10 mm, par exemple égale à 6 mm.

On choisit la matière et l'épaisseur de la base pour avoir une souplesse suffisante pour épouser les formes possibles des bords supérieurs des parois verticales 10 et 11, sous la pression de la mousse que l'on coule dessus. Plusieurs exemples d'épaisseurs et de matières sont les suivantes:
Epaisseur = 0,3 mm pour du polyamide 6, à ± 0,1 mm
Epaisseur = 0,25 mm pour du polyamide 6-6, à ± 0,1 mm.

Cependant on peut également réaliser la base en polyéthylène, polypropylène, ou toute autre matière thermoplastique ou thermodurcissable, notamment en polyester.

La mousse que l'on coule est un matériau compatible avec celui du surmoulé, c'est-à-dire qu'il s'y fixe bien lorsqu'il se solidifie en contact avec le surmoulé. On peut en particulier choisir une mousse polyuréthane ou poly-éther. Mais d'autres matériaux sont bien évidemment possibles.

On pose la base 2 par sa face 4( au niveau des deux lisières 16 et 17 sans crochet et des régions 7 et 8 sans crochets de la bande 15) sur les bords supérieurs des parois 9, 10, 13 et 14, pour ainsi former la cavité 9. On coule ensuite la mousse dans le moule puis on laisse cette mousse se solidifier. On retire ensuite l'objet 18 moulé du moule. L'objet 18 moulé est alors muni du surmoulé avec des crochets sans mousse qui vont pouvoir coopérer par exemple avec des boucles d'un tissu pour envelopper l'objet moulé, par exemple un coussin de siège automobile.

Dans le fond de la cavité, il est disposé un aimant 30 destiné à coopérer avec la nervure en résine métallique pour aider au positionnement du surmoulé au-dessus de la cavité. Les aimants sont en particulier des aimants à terre rare (aimants Samarium-Cobalt).
La résine métallique est déposée sur la face supérieure en forme de nervures, deux gorges ou renfoncements longitudinaux 31 et 32 étant formés à l'interface base-résine. Ils permettent d'assurer un meilleur ancrage du surmoulé dans la mousse qui s'y solidifie après y avoir pénétrer . Pour encore plus améliorer cet ancrage, notamment pour les largeurs les plus petites de la bande à crochet, on peur prévoir sur la surface extérieure 33 de la nervure de résine métallique des motifs d'ancrage, formés par exemple par gravure.

Le fait de prévoir une nervure en résine métallique est particulièrement avantageux comparé à une bande métallique collée à la base. En effet la résine métallique suit mieux les éventuelles ondulation du surmoulé et n'a pas tendance à faire saillie au delà des bords longitudinaux du surmoulé, ce qui est le cas pour une bande métallique et peut blessé un ouvrier qui prend le surmoulé pour le mettre au fond du moule par exemple.
pour que cette résine soit cependant d'une efficacité suffisante, elle doit cependant être constituée de au moins 6 grammes de poudre métallique, par exemple 8,4 grammes par mètre linéaire, mélangée à une résine classique d'au moins 4 grammes par mètre linéaire, pour un poids total de résine métallique d'au moins 10 grammes par mètre linéaire.

## Revendications

1. Surmoulé, constitué d'une base (2) ayant une face (6) supérieure et une face (4) inférieure, de crochets (3) issus de la face (4) inférieure de la base et de matériau métallique fixé sur la face supérieure de la base, les crochets (3) étant disposés dans une région en forme de bande (15) longitudinale, **caractérisé en ce que** la base est de forme plane, la bande à crochets a une largeur inférieure à 10 mm, de préférence comprise entre 3 et 10 mm, et la base (2) plane est en un matériau tel, et a une épaisseur telle, qu'elle peut se déformer pour épouser des formes de bords supérieurs de parois verticales sur lesquels le surmoulé est destiné à être posé par l'intermédiaire de sa face inférieure.

2. Surmoulé suivant la revendication 1, **caractérisé en ce que** les crochets (3) sont réalisés sous la forme de rangées longitudinales, le nombre de rangées étant de préférence inférieur ou égal à 3, et les crochets ont une forme en sapin de Noël.

3. Surmoulé suivant la revendication 1 ou 2, **caractérisé en ce que** la bande (15) longitudinale comportant des crochets, s'arrête à distance des extrémités longitudinales de la base, des régions (7, 8) d'extrémités longitudinales sans crochets étant ainsi formées, notamment sur une distance de quelques millimètres, de préférence inférieure à 15 mm, pour permettre la pose de la base au niveau de ses extrémités longitudinales directement sur les bords supérieurs des parois (13, 14), formant la cavité.

4. Surmoulé suivant la revendication 1, 2 ou 3, **caractérisé en ce que** la base est en polyamide 6 et a une épaisseur comprise entre 0,2 mm et 0,4 mm, ou la base a une épaisseur de 0,15 à 0,35 mm et est en polyamide 6-6.

5. Surmoulé suivant l'une des revendications 1 à 4, **caractérisé en ce que** le matériau métallique est réalisé sous la forme d'une nervure de résine métallique fixée par collage à la face (6) supérieure de la base (2), notamment en formant deux renfoncements (22) longitudinaux de part et d'autre de l'interface résine-base, pour permettre un bon ancrage de la mousse, et on peut également prévoir des motifs d'ancrage à la surface extérieure de la nervure de résine métallique.

6. Surmoulé suivant la revendication 5, **caractérisé en ce que** la nervure de résine comporte au moins 6 g par mètre linéaire de poudre métallique pour un poids total de résine métallique d'au moins 10 g par mètre linéaire.

7. Objet moulé en mousse sur laquelle est fixé un ou plusieurs surmoulés suivant l'une des revendications 1 à 6 par durcissement de la mousse sur la face supérieure de la base après coulage de la mousse dans un moule.

8. Moule dans le fond duquel est réalisée une cavité (9) ayant des (10, 11) parois faisant saillies du fond et sur les bords supérieurs desquelles est destiné à être posé un surmoulé suivant l'une des revendications 1 à 6 destiné à être fixé à un objet moulé, par solidification d'une mousse que l'on coule par-dessus, **caractérisé en ce que** la cavité (9) a deux parois latérales (10, 11), de préférence parallèles, distantes d'une distance comprise entre 4,5 et 12 mm.

9. Procédé de fabrication d'un objet moulé suivant la revendication 7 comportant un surmoulé ayant des crochets (1) qui font saillie vers l'extérieur de l'objet moulé **caractérisé en ce qu'**il consiste :
a) à former une cavité (9) au fond d'un moule comportant deux parois (10, 11) latérales à distance l'une de l'autre, de préférence à une distance comprise entre 4,5 et 12 mm ;
b) à poser un surmoulé suivant l'une des revendications 1 à 6 sur les bords supérieurs extérieurs des deux parois latérales (10, 11), les crochets (3) étant orientés vers l'intérieur de la cavité (9) formée par les deux parois (10, 11) latérales au fond du moule, puis
c) à verser de la mousse liquide dans le moule pour qu'elle vienne se fixer sur la face supérieure du surmoulé par solidification, sans pour autant pouvoir pénétrer à l'intérieur de la cavité (9) pour endommager les crochets.

10. Procédé suivant la revendication 9, **caractérisé en ce que** celui-ci consiste en outre à poser les bords longitudinaux d'extrémité de la base sur des parois (10, 11) de la cavité (9), notamment deux parois d'extrémité longitudinales, lors de la pose du surmoulé sur la cavité (9).

11. Procédé suivant la revendication 9 ou 10, **caractérisé en ce que** des régions d'extrémité longitudinales de la base sont dépourvues de crochets (3), notamment sur une distance longitudinale de quelques mm à quelques cm, notamment inférieur à 15mm.

## Claims

1. An article over which a moulding is to be made, said article comprising a base (2) having a top surface (6) and a bottom surface (4), hooks (3) extending from the bottom surface (4) of the base and metallic material fixed on the top surface of the base, the hooks (3) being disposed in a region in the form of a longitudinal strip (15), **characterised in that** the base is flat in shape, the hook strip has a width less than 10 mm, preferably between 3 and 10 mm, and the flat base (2) is of a material such and of a thickness such that it can undergo deformation to follow the shapes of top edges of vertical walls on which the article for moulding over is intended to be placed by its bottom surface.

2. An article for moulding over according to claim 1, **characterised in that** the hooks (3) are made in the form of longitudinal rows, the number of rows preferably being less than or equal to 3, and the hooks have a Christmas tree shape.

3. An article for moulding over according to claim 1 or 2, **characterised in that** the longitudinal strip (15) comprising hooks stops at a distance from the longitudinal ends of the base, longitudinal end regions (7, 8) thus being formed without hooks, particularly over a distance of some millimetres, preferably less than 15 mm, to enable the base to be placed at the level of its longitudinal ends directly on the top edges of the walls (13, 14) forming the cavity.

4. An article for moulding over according to claim 1, 2 or 3, **characterised in that** the base is of polyamide 6 and has a thickness of between 0.2 mm and 0.4 mm or the base has a thickness of 0.15 to 0.35 mm and is of polyamide 6 - 6.

5. An article for moulding over according to any one of claims 1 to 4, **characterised in that** the metallic material is embodied in the form of a metallic resin rib fixed by gluing to the top surface of the base, particularly by forming two longitudinal reinforcements on either side of the resin-base interface to provide good anchoring of the foam, and anchoring patterns can also be provided at the outer surface of the metallic resin rib.

6. An article for moulding over according to claim 5, **characterised in that** the resin rib comprises at least 6 g per linear metre of metallic powder for a total weight of metallic resin of at least 10 g per linear metre.

7. A moulded object of foam to which one or more article for moulding over according to any one of claims 1 to 6 is fixed by hardening of the foam on the top surface of the base after the foam has been poured in a mould.

8. A mould in the base of which there is made a cavity having walls projecting from the base and on the top edges of which there is intended to be placed an article for moulding over according to any one of claims 1 to 6, said article being intended to be fixed to a moulded object by solidification of a foam that is poured thereover, **characterised in that** the cavity has two side walls, preferably parallel, spaced apart by a distance between 4.5 and 12 mm.

9. A method of manufacturing a moulded object according to claim 7, comprising a moulded-over article having hooks projecting towards the exterior of the moulded object, **characterised in that** it comprises:
a) forming at the base of a mould a cavity comprising two side walls spaced apart preferably by a distance of between 4.5 and 12 mm;
b) placing an article for moulding over according to any one of claims 1 to 6 on the outer top edges of the two side walls, the hooks being directed towards the interior of the cavity formed by the two side walls at the base of the mould, then
c) pouring liquid foam into the mould so that it will be fixed on the top surface of the moulded-over article by solidification without being able to penetrate to the interior of the cavity to damage the hooks.

10. A method according to claim 9, **characterised in that** it consists also in placing the longitudinal end edges of the base on walls of the cavity, particularly two longitudinal end walls, when the article for moulding over is placed on the cavity.

11. A method according to claim 9 or 10, **characterised in that** longitudinal end regions of the base have no hooks, particularly over a longitudinal distance of some millimetres to some centimetres, particularly less than 15 mm.

## Patentansprüche

1. Overmold, bestehend aus einer Basis (2) mit einer oberen Fläche (6) und einer unteren Fläche (4), Haken (3), die aus der unteren Fläche (4) der Basis hervorstehen und aus einem an der oberen Fläche der Basis befestigten metallischen Material hergestellt sind, wobei die Haken(3) in einem Bereich in Form eines longitudinalen Bandes (15) angeordnet sind, **dadurch gekennzeichnet, dass** die Basis von planer Form ist, das Hakenband eine Breite unter 10 mm aufweist, vorzugsweise zwischen 3 und 10 mm, und die plane Basis (2) aus einem solchen Material hergestellt ist und eine solche Dicke aufweist, dass sie sich verformen kann, um die Formen von oberen Rändern von Vertikalwänden anzunehmen, über denen das Overmold mittels seiner unteren Fläche aufgebracht werden soll.

2. Overmold nach Anspruch 1, **dadurch gekennzeichnet, dass** die Haken (3) in Form von Longitudinalreihen hergestellt sind, wobei die Anzahl von Reihen vorzugsweise kleiner oder gleich 3 ist und die Haken Christbaumform aufweisen.

3. Overmold nach Anspruch 1 oder 2, **dadurch gekennzeichnet, dass** das Haken aufweisende longitudinale Band (15) im Abstand zu den longitudinalen Enden der Basis endet, wobei so Bereiche (7,8) longitudinaler Enden ohne Haken gebildet werden, und zwar in einem Abstand von einigen Millimetern, vorzugsweise unter 15 mm, um das Aufbringen der Basis auf Höhe seiner longitudinalen Enden direkt auf die oberen Ränder der Wände (13,14) zu ermöglichen, wodurch der Hohlraum gebildet wird.

4. Overmold nach Anspruch 1, 2 oder 3, **dadurch gekennzeichnet, dass** die Basis aus Polyamid (6) ist und eine Dicke zwischen 0,2 mm und 0,4 mm aufweist, oder die Basis eine Dicke von 0,15 bis 0,35 mm hat und aus Polyamid (6-6) ist.

5. Overmold nach einem der Ansprüche 1 bis 4, **dadurch gekennzeichnet, dass** das Metallmaterial in Form einer metallischen Harzrippe hergestellt ist, die durch Aufkleben auf die obere Fläche (6) der Basis (2) befestigt ist, und zwar indem zwei longitudinale Vertiefungen (22) auf beiden Seiten der Harz-Basis-Grenzfläche gebildet werden, um eine gute Verankerung des Schaumstoffs zu gestatten, und auch Verankerungsstrukturen an der Außenfläche der metallischen Harzrippe vorgesehen sein können.

6. Overmold nach Anspruch 5, **dadurch gekennzeichnet, dass** die Harzrippe mindestens 6g pro laufendem Meter Metallpulver für ein Gesamtgewicht des Metallharzes von mindestens 10g pro laufendem Meter umfasst.

7. In Schaumstoff gegossener Gegenstand, an dem ein oder mehrere Overmold(s) gemäß einem der Ansprüche 1 bis 6 befestigt sind, und zwar durch Aushärten des Schaumstoffs auf der oberen Oberfläche der Basis nach Gießen des Schaumstoffs in eine Gießform.

8. Gießform, an deren Boden ein Hohlraum (9) mit Wänden (10,11) hergestellt ist, die von dem Boden vorspringen und an deren oberen Rändern ein Overmold gemäß einem der Ansprüche 1 bis 6 aufzubringen ist, der auf einem gegossenen Gegenstand durch Verfestigung eines Schaumstoffs, der darüber gegossen wird, zu befestigen ist, **dadurch gekennzeichnet, dass** der Hohlraum (9) zwei Seitenwände (10,11), vorzugsweise parallel, aufweist, die um einen zwischen 4,5 und 12 mm liegenden Abstand beabstandet sind.

9. Herstellungsverfahren eines geformten bzw. gegossenen Gegenstands nach Anspruch 7, mit einem Overmold mit Haken (3), die von dem gegossenen Gegenstand nach außen vorstehen, **dadurch gekennzeichnet, dass** es besteht aus:
a) der Bildung eines Hohlraums (9) am Boden einer Gießform, die zwei Seitenwände (10, 11) aufweist, die voneinander vorzugsweise in einem zwischen 4,5 und 12 mm liegenden Abstand beabstandet sind,
b) dem Aufbringen eines Overmolds nach einem der Ansprüche 1 bis 6 auf die oberen äußeren Ränder der beiden Seitenwände (10,11), wobei die Haken (3) ins Innere des von den beiden Seitenwänden (10,11) am Boden der Gießform gebildeten Hohlraums (9) gerichtet sind, und anschließend
c) dem Gießen flüssigen Schaumstoffs in die Gießform, damit er an der oberen Oberfläche des Overmolds durch Verfestigung anhaftet, ohne aber ins Innere des Hohlraums (9) eindringen zu können, um die Haken nicht zu beschädigen.

10. Verfahren nach Anspruch 9, **dadurch gekennzeichnet, dass** es außerdem darin besteht, bei der Aufbringung des Overmolds auf den Hohlraum (9) die longitudinalen Endränder der Basis auf die Wände (10,11) des Hohlraums (9) aufzubringen, insbesondere zwei longitudinale Endwände.

11. Verfahren nach Anspruch 9 oder 10, **dadurch gekennzeichnet, dass** die longitudinalen Endbereiche der Basis keine Haken (3) aufweisen, und zwar auf einer longitudinalen Entfernung von einigen Millimetern bis einigen Zentimetern, insbesondere unter 15 mm.
